# EUROPEAN PATENT APPLICATION

(11) **EP 3 916 968 A1**
(43) Date of publication of application: **01.12.2021**
(21) Application number: 20185820.6
(22) Date of filing: 14.07.2020
(51) Int. Cl.: H02K 11/21, F16H 25/20, H02K 7/116, H02K 11/00

(54) **ELECTRIC PUSH ROD**

(30) Priority: 25.05.2020 CN 202020898332 U
(71) Applicant: Li, Sujiao, Yizhang, Hunan (CN)
(72) Inventor: Li, Sujiao, Yizhang, Hunan (CN)
(74) Representative: Cabinet Chaillot

(57) **Abstract**

The present invention provides an electric push rod which has an upper limit stroke and a lower limit stroke. When the push rod extends to a maximum length or retracts to a minimum length, an upper limit switch or a lower limit switch controls a drive motor to stop working through a switch printed circuit board (PCB), so that the electric push rod can be effectively protected, and it is prevented that an inner tube moves excessively forward and fall off or the inner tube moves excessively backward to damage a screw rod.

## Description

### TECHNICAL FIELD

The present invention relates to the field of push rods, and in particular to an electric push rod.

### BACKGROUND

An electric push rod is a linear drive apparatus using a lead screw nut for transmission to convert rotation of a motor into linear movement of the push rod. The electric push rod may be used as an execution mechanism in various simple or complex process procedures to implement long-distance control, central control or automatic control.

A conventional electric push rod mainly includes a motor, a transmission worm gear driven by the motor to rotate and sleeved over a lead screw, a screw-rod elevation assembly mounted on the lead screw, and a push rod threaded to an elevation nut of the screw-rod elevation assembly. The motor operates to drive the transmission worm gear to rotate, so as to drive the lead screw to rotate. The lead screw drives the elevation nut to move forward or backward, so that the push rod moves forward or backward. The push rod of the electric push rod with the foregoing structural design is not provided with a corresponding protection apparatus, thus the push rod may move forward excessively and fall off or the push rod move backward excessively to damage a screw rod.

Therefore, there is still room for improvement in the prior art.

### SUMMARY

To resolve the foregoing problem, the present invention provides an electric push rod, which is provided with a lower limit switch and an upper limit switch. That is, when the push rod extends to a maximum length or retracts to a minimum length, the upper limit switch or the lower limit switch controls a drive motor to stop working through a switch printed circuit board (PCB), so that the electric push rod can be effectively protected, and an inner tube is prevented from excessively moving forward and falling off or the inner tube is prevented from excessively moving backward to damage a screw rod.

To achieve the foregoing objective, the technical solution adopted in the present invention is an electric push rod, including a gear box and a drive assembly, the drive assembly including a drive motor and a worm connected to an output shaft of the drive motor, a push rod assembly being provided in the gear box, where the push rod assembly includes a switch PCB, an upper limit switch, a lower limit switch, a start capacitor, a screw rod, an outer tube assembly, a restoring spring sleeved over the outer tube assembly and clamped in the gear box, an inner tube provided in the outer tube assembly and freely rotatable in an axial direction of the outer tube assembly, a nut movably sleeved on the screw rod, and a transmission gear set fixedly assembled at an end of the screw rod; one end of the outer tube assembly is clamped in the gear box, and the other end of the outer tube assembly extends outside the gear box; the upper limit switch, the lower limit switch, the start capacitor, and the drive motor are all electrically connected to the switch PCB, the lower limit switch and the upper limit switch are arranged side by side at the same level, and the upper limit switch is tightly attached to an outer side wall of the outer tube assembly and is in a pressed state; one end of the screw rod is movably assembled in the gear box through a first bearing, the other end of the screw rod passes through the inner tube, the nut is connected to one end of the inner tube, and the other end of the inner tube extends outside the gear box; the drive motor drives the transmission gear set to rotate through the worm, and the transmission gear set drives the screw rod to rotate and enables the inner tube fixedly connected to the nut to move in an axial direction of the screw rod; if the inner tube moves in the axial direction of the screw rod and pushes the outer tube assembly to move in a direction away from the first bearing, the outer side wall of the outer tube assembly leaves the upper limit switch, the drive motor stops working, and the outer tube assembly is restored under the effect of the restoring spring; and if the inner tube moves in the axial direction of the screw rod and pushes the outer tube assembly to move in a direction toward the first bearing, the outer side wall of the outer tube assembly presses the lower limit switch, the drive motor stops working, and the outer tube assembly is restored under the effect of the restoring spring.

Further, preferably, the transmission gear set includes a spline and a double tooth gear, a plurality of lugs are evenly distributed on a surface of the spline in a circumferential direction of the spline, a plurality of slots corresponding to the lugs are provided in an inner side wall of the double tooth gear, the spline is fixedly sleeved at an end of the screw rod, the double tooth gear is sleeved over the spline, and the lugs on the spline are clamped at the corresponding slots; and and the worm meshes with the double tooth gear.

Further, the push rod assembly further includes a reinforcement bearing, the reinforcement bearing is sleeved at an end of the screw rod, and the double tooth gear is located between the first bearing and the reinforcement bearing.

Further, preferably, a threaded sleeve is integrally formed at an end of the nut away from the reinforcement bearing, an outer side surface of the threaded sleeve is provided with an external thread, an inner side wall at an end of the inner tube is provided with an internal thread, and the inner tube is assembled with the threaded sleeve through mating of the internal thread with the external thread and is thus connected to the nut.

Further, preferably, a tail end, extending outside the gear box, of the inner tube is further connected with a first connector, and the first connector is provided with a first connection hole.

Further, preferably, the outer tube assembly includes an outer tube body, an outer tube sleeve, a hole stop ring, and a limit stop ring; the outer tube sleeve is spirally connected to an end of the outer tube body away from the nut, the limit stop ring is sleeved on an outer side surface of the outer tube body, and the limit stop ring is located in the middle of the restoring spring; an inner side wall at an end of the outer tube body near the reinforcement bearing is provided with a stop ring assembly slot, the hole stop ring is assembled in the stop ring assembly slot, if the nut moves in a direction away from the reinforcement bearing, the nut pushes the outer tube sleeve and enables the outer tube body to move in a direction away from the reinforcement bearing, and at the same time the limit stop ring pushes the restoring spring and places the restoring spring in a compressed state; and if the nut moves in a direction toward the reinforcement bearing, the nut pushes the hole stop ring and enables the outer tube body to move in a direction toward the reinforcement bearing, and at the same time the limit stop ring pushes the restoring spring and places the restoring spring in the compressed state.

Further, preferably, a tail end of the outer tube body near the reinforcement bearing is a bevel structure.

Further, preferably, an inner wall of the outer tube sleeve is further provided with a waterproof slot, and a first waterproof ring is provided in the waterproof slot.

Further, preferably, a second waterproof ring is further provided at a joint between the outer tube body and the gear box.

The beneficial effects of the present invention are as follows.
1. In the present invention, with the provision of the lower limit switch and the upper limit switch, the electric push rod in the present invention may have an upper limit stroke and a lower limit stroke. That is, when the push rod extends to a maximum length or retracts to a minimum length, the upper limit switch or the lower limit switch controls a drive motor through the switch PCB to stop working, thus effectively protecting the electric push rod and preventing that the inner tube moves excessively forward and fall off or the inner tube moves excessively backward to damage the screw rod.
2. The upper limit stroke and the lower limit stroke of the electric push rod are both controlled by the outer tube assembly. The inner tube driving the outer tube assembly to press the lower limit switch forms the lower limit stroke, and the inner tube driving the outer tube assembly to leave the upper limit switch forms the upper limit stroke. In addition, in the present invention, the lower limit switch and the upper limit switch are arranged side by side at the same level. The upper limit switch is tightly attached to the outer side wall of the outer tube assembly and is in the pressed state. During assembly, it is only necessary to control the level of the outer tube assembly, the lower limit switch, and the upper limit switch to reduce failure problems caused by errors of other parts.

### BRIEF DESCRIPTION OF THE DRAWINGS

FIG. 1 is a three-dimensional schematic structural diagram of an electric push rod according to the present invention;
FIG. 2 is a schematic internal structural diagram of an electric push rod according to the present invention;
FIG. 3 is a schematic structural diagram of a longitudinal section of an electric push rod according to the present invention; and
FIG. 4 is a schematic structural diagram of an outer tube assembly according to the present invention.

Reference numerals: gear box 1, drive motor 2, outer tube body 11, outer tube sleeve 111, inner tube 12, first connector 121, first connection hole 1211, double tooth gear 13, first bearing 14, reinforcement bearing 15, screw rod 16, restoring spring 17, limit stop ring 18, second waterproof ring 19, worm 21, lower limit switch 22, upper limit switch 23, switch PCB 24, start capacitor, first waterproof ring 1111, spline 10, nut 100, threaded sleeve 10001, hole stop ring 101, and bevel structure 102.

### DETAILED DESCRIPTION

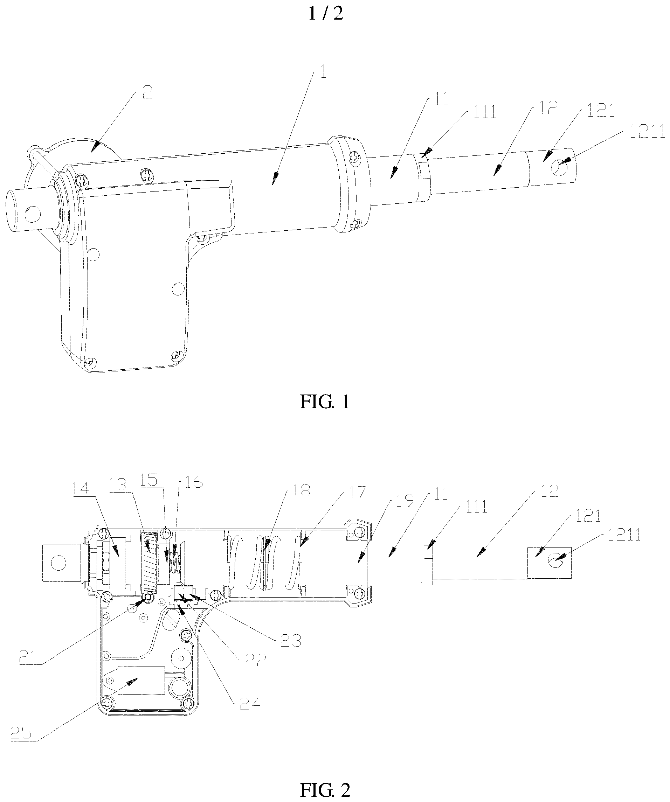

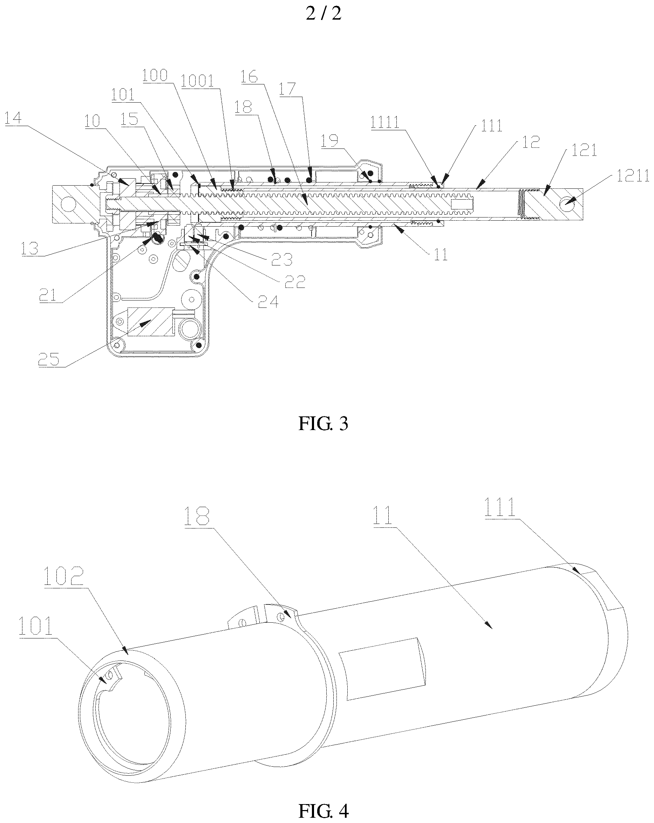

Referring to FIG. 1 to FIG. 4, an electric push rod includes a gear box 1 and a drive assembly. The drive assembly includes a drive motor 2 and a worm 21 connected to an output shaft of the drive motor 2. A push rod assembly is provided in the gear box 1. The push rod assembly includes a switch PCB 24, an upper limit switch 23, a lower limit switch 22, a start capacitor 25, a screw rod 16, an outer tube assembly, a restoring spring 17 sleeved over the outer tube assembly and clamped in the gear box 1, an inner tube 12 provided in the outer tube assembly and freely rotatable in an axial direction of the outer tube assembly, a nut 100 movably sleeved on the screw rod 16, and a transmission gear set fixedly assembled at an end of the screw rod 16. One end of the outer tube assembly is clamped in the gear box 1, and the other end of the outer tube assembly extends outside the gear box 1. The upper limit switch 23, the lower limit switch 22, the start capacitor 25, and the drive motor 2 are all electrically connected to the switch PCB 24. The lower limit switch 22 and the upper limit switch 23 are arranged side by side at the same level. The upper limit switch 23 is tightly attached to an outer side wall of the outer tube assembly and is in a pressed state. One end of the screw rod 16 is movably assembled in the gear box 1 through a first bearing 14, and the other end of the screw rod 16 is inserted in the inner tube 12. The nut 100 is connected to one end of the inner tube 12, and the other end of the inner tube 12 extends outside the gear box 1. The drive motor 2 drives the transmission gear set to rotate through the worm 21, and the transmission gear set drives the screw rod 16 to rotate and enables the inner tube 12 fixedly connected to the nut 100 to move in an axial direction of the screw rod 16. If the inner tube 12 moves in the axial direction of the screw rod 16 and pushes the outer tube assembly to move in a direction away from the first bearing 14, the outer side wall of the outer tube assembly leaves the upper limit switch 23, the drive motor 2 stops working, and the outer tube assembly is restored under the effect of the restoring spring 17. If the inner tube 12 moves in the axial direction of the screw rod 16 and pushes the outer tube assembly to move in a direction toward the first bearing 14, the outer side wall of the outer tube assembly presses the lower limit switch 22, the drive motor 2 stops working, and the outer tube assembly is restored under the effect of the restoring spring 17.

In the present invention, the lower limit switch 22 and the upper limit switch 23 are provided, so that the electric push rod in the present invention may have an upper limit stroke and a lower limit stroke. That is, when the push rod extends to a maximum length or retracts to a minimum length, the upper limit switch 23 or the lower limit switch 22 controls the drive motor 2 through the switch PCB 24 to stop working, so that the electric push rod can be effectively protected. The upper limit stroke and the lower limit stroke of the electric push rod are controlled by the outer tube assembly. The inner tube 12 driving the outer tube assembly to press the lower limit switch 22 forms the lower limit stroke, and the inner tube 12 driving the outer tube assembly to leave the upper limit switch 23 forms the upper limit stroke. In addition, in the present invention, the lower limit switch 22 and the upper limit switch 23 are arranged side by side at the same level. The upper limit switch 23 is tightly attached to the outer side wall of the outer tube assembly and is in the pressed state. During assembly, it is only necessary to control the level of the outer tube assembly, the lower limit switch 22, and the upper limit switch 23, to reduce failure problems caused by errors of other parts.

Further, the transmission gear set includes a spline 10 and a double tooth gear 13. A plurality of lugs are evenly distributed on a surface of the spline 10 in a circumferential direction of the spline 10. A plurality of slots corresponding to the lugs are provided in an inner side wall of the double tooth gear 13. The spline 10 is fixedly sleeved at an end of the screw rod 16. The double tooth gear 13 is sleeved over the spline 10. The lugs on the spline 10 are clamped at the corresponding slots. The worm 21 meshes with the double tooth gear 13.

Further, the push rod assembly further includes a reinforcement bearing 15. The reinforcement bearing 15 is sleeved at an end of the screw rod 16. The double tooth gear 13 is located between the first bearing 14 and the reinforcement bearing 15. Because a single bearing is prone to tooth wear, gear oscillation, and the like, the reinforcement bearing 15 may be added. The double-bearing structure ensures more steady operation.

Further, a threaded sleeve 1001 is integrally formed at an end of the nut 100 away from the reinforcement bearing 15. An outer side surface of the threaded sleeve 1001 is provided with an external thread. An inner side wall at an end of the inner tube 12 is provided with an internal thread. The inner tube 12 is assembled with the threaded sleeve 1001 through mating of the internal thread with the external thread and is thus connected to the nut 100. In this specific embodiment, owning to the fact that the inner tube 12 is assembled with the threaded sleeve 1001 through mating of the internal thread with the external thread and is thus connected to the nut 100, the inner tube 12 is detachably connected to the nut 100. That is, a user may choose inner tubes 12 with different lengths according to an actual requirement for assembly with the nut 100, thus improving the applicability of the entire push rod.

Further, a tail end of the inner tube 12 extending outside the gear box 1 is further connected with a first connector 121. The first connector 121 is provided with a first connection hole 1211. Other devices may be connected by the first connector 121, and the electric push rod may be used to push or retract the other devices.

Further, the outer tube assembly includes an outer tube body 11, an outer tube sleeve 111, a hole stop ring 101, and a limit stop ring 18. The outer tube sleeve 111 is spirally connected to an end of the outer tube body 11 away from the nut 100. The limit stop ring 18 is sleeved on an outer side surface of the outer tube body 11. The limit stop ring 18 is located in the middle of the restoring spring 17. An inner side wall at an end of the outer tube body 11 near the reinforcement bearing 15 is provided with a stop ring assembly slot. The hole stop ring 101 is assembled in the stop ring assembly slot. If the nut 100 moves in a direction away from the reinforcement bearing 15, the threaded sleeve 1001 of the nut 100 pushes the outer tube sleeve 111 and enables the outer tube body 11 to move in a direction away from the reinforcement bearing 15, and at the same time the limit stop ring 18 pushes the restoring spring 17 and enables the restoring spring 17 to be in a compressed state. In this case, the outer side wall of the outer tube assembly leaves the upper limit switch 23, the drive motor 2 stops working, and the outer tube assembly is restored under the effect of the restoring spring 17. If the nut 100 moves in a direction toward the reinforcement bearing 15, the nut 100 pushes the hole stop ring 101 and enables the outer tube body 11 to move in a direction toward the reinforcement bearing 15, and at the same time the limit stop ring 18 pushes the restoring spring 17 and enables the restoring spring 17 to be in the compressed state. In this case, the outer side wall of the outer tube assembly presses the lower limit switch 22, the drive motor 2 stops working, and the outer tube assembly is restored under the effect of the restoring spring 17. A manufacturer may design outer tube sleeves 111 with different lengths, that is, changing a distance between the threaded sleeve 1001 and the outer tube sleeve 111, thereby controlling different upper limit strokes of the push rod.

Further, a tail end of the outer tube body 11 near the reinforcement bearing 15 is a bevel structure 102 which may effectively press the upper limit switch 23 and the lower limit switch 22. For example, if the outer tube body 11 leaves the upper limit switch 23, the outer tube body 11 will be restored under the effect of the restoring spring 17, and at the same time the bevel structure 102 presses the upper limit switch 23 to realize pressing of the upper limit switch 23 (the drive motor 2 is not affected at this time).

Further, an inner wall of the outer tube sleeve 111 is further provided with a waterproof slot, and a first waterproof ring 1111 is provided in the waterproof slot. The first waterproof ring 1111 can effectively prevent external vapor from permeating through a gap between the outer tube sleeve 111 and the inner tube 12, to protect the inner tube 12 and the outer tube body 11 from erosion.

Further, a second waterproof ring 19 is further provided at a joint between the outer tube body 11 and the gear box 1. The second waterproof ring 19 can effectively prevent external vapor from permeating through a gap between the outer tube body 11 and the gear box 1, to protect the outer tube body 11 and the gear box 1 from erosion.

The foregoing implementations are only preferred implementations of the present invention, and are not used to limit the scope of the present invention. Various variations and improvements made by a person of ordinary skill in the art to the technical solutions of the present invention without departing from the design spirit of the present invention shall all fall within the protection scope defined by the claims of the present invention.

## Claims

1. An electric push rod, comprising a gear box and a drive assembly, the drive assembly comprising a drive motor and a worm connected to an output shaft of the drive motor, a push rod assembly being provided in the gear box, wherein the push rod assembly comprises a switch printed circuit board (PCB), an upper limit switch, a lower limit switch, a start capacitor, a screw rod, an outer tube assembly, a restoring spring sleeved over the outer tube assembly and clamped in the gear box, an inner tube provided in the outer tube assembly and freely rotatable in an axial direction of the outer tube assembly, a nut movably sleeved on the screw rod, and a transmission gear set fixedly assembled at an end of the screw rod; one end of the outer tube assembly is clamped in the gear box, and the other end of the outer tube assembly extends outside the gear box; the upper limit switch, the lower limit switch, the start capacitor, and the drive motor are all electrically connected to the switch PCB, the upper limit switch and the lower limit switch are arranged side by side at the same level, and the upper limit switch is tightly attached to an outer side wall of the outer tube assembly and is in a pressed state; one end of the screw rod is movably assembled in the gear box through a first bearing, the other end of the screw rod passes through the inner tube, the nut is connected to one end of the inner tube, and the other end of the inner tube extends outside the gear box; the drive motor drives the transmission gear set to rotate through the worm, and the transmission gear set drives the screw rod to rotate and enables the inner tube fixedly connected to the nut to move in an axial direction of the screw rod; if the inner tube moves in the axial direction of the screw rod and pushes the outer tube assembly to move in a direction away from the first bearing, the outer side wall of the outer tube assembly leaves the upper limit switch, the drive motor stops working, and the outer tube assembly is restored under the effect of the restoring spring; and if the inner tube moves in the axial direction of the screw rod and pushes the outer tube assembly to move in a direction toward the first bearing, the outer side wall of the outer tube assembly presses the lower limit switch, the drive motor stops working, and the outer tube assembly is restored under the effect of the restoring spring.

2. The electric push rod according to claim 1, wherein the transmission gear set comprises a spline and a double tooth gear, a plurality of lugs are evenly distributed on a surface of the spline in a circumferential direction of the spline, a plurality of slots corresponding to the lugs are provided in an inner side wall of the double tooth gear, the spline is fixedly sleeved at an end of the screw rod, the double tooth gear is sleeved over the spline, and the lugs on the spline are clamped at the corresponding slots; and the worm meshes with the double tooth gear.

3. The electric push rod according to claim 2, wherein the push rod assembly further comprises a reinforcement bearing sleeved at an end of the screw rod, and the double tooth gear is located between the first bearing and the reinforcement bearing.

4. The electric push rod according to claim 2, wherein a threaded sleeve is integrally formed at an end of the nut away from the reinforcement bearing, an outer side surface of the threaded sleeve is provided with an external thread, an inner side wall at an end of the inner tube is provided with an internal thread, and the inner tube is assembled with the threaded sleeve through mating of the internal thread with the external thread, and is thus connected to the nut.

5. The electric push rod according to claim 1, wherein a tail end of the inner tube extending outside the gear box is further connected with a first connector which is provided with a first connection hole.

6. The electric push rod according to claim 2, wherein the outer tube assembly comprises an outer tube body, an outer tube sleeve, a hole stop ring, and a limit stop ring; the outer tube sleeve is spirally connected to an end of the outer tube body away from the nut, the limit stop ring is sleeved on an outer side surface of the outer tube body, and the limit stop ring is located in the middle of the restoring spring; an inner side wall at an end of the outer tube body near the reinforcement bearing is provided with a stop ring assembly slot, if the hole stop ring is assembled in the stop ring assembly slot, the nut moves in a direction away from the reinforcement bearing, the nut pushes the outer tube sleeve and enables the outer tube body to move in a direction away from the reinforcement bearing, and at the same time the limit stop ring pushes the restoring spring and places the restoring spring in a compressed state; and if the nut moves in a direction toward the reinforcement bearing, the nut pushes the hole stop ring and enables the outer tube body to move in a direction toward the reinforcement bearing, and at the same time the limit stop ring pushes the restoring spring and places the restoring spring in the compressed state.

7. The electric push rod according to claim 6, wherein a tail end of the outer tube body, near the reinforcement bearing is a bevel structure.

8. The electric push rod according to claim 6, wherein an inner wall of the outer tube sleeve is further provided with a waterproof slot, and a first waterproof ring is provided in the waterproof slot.

9. The electric push rod according to claim 6, wherein a second waterproof ring is further provided at a joint between the outer tube body and the gear box.
